# EUROPEAN PATENT APPLICATION

(11) **EP 4 797 813 A1**
(43) Date of publication of application: **26.08.2026**
(21) Application number: 24891756.9
(22) Date of filing: 12.11.2024
(51) Int. Cl.: H04W 52/02, H04W 8/00, H04W 48/16, H04W 72/0446, H04W 72/50, H04W 76/38, H04W 84/12, H04W 84/18

(54) **RANGING-BASED WI-FI AWARE COMMUNICATION METHOD AND APPARATUS**

(30) Priority: 13.11.2023 KR 20230156804
(71) Applicant: Samsung Electronics Co., Ltd., Suwon-si, Gyeonggi-do 16677 (KR)
(72) Inventor: CHOI, Junyoung, Suwon-si Gyeonggi-do 16677 (KR); SEO, Seungbeom, Suwon-si Gyeonggi-do 16677 (KR); OH, Hyunseob, Suwon-si Gyeonggi-do 16677 (KR)
(74) Representative: HGF
(86) International application number: PCT/KR2024/017874
(87) International publication number: WO 2025/105810

(57) **Abstract**

An operating method of a first electronic apparatus supporting Wi-Fi aware communication, according to an embodiment of the present disclosure, may comprise the steps of: identifying, on the basis of at least one event, that the first electronic apparatus operates in an always on NAN (AoN) mode in which a Wi-Fi aware connection with at least one electronic apparatus is maintained; performing, by the first electronic apparatus, Wi-Fi aware communication with a second electronic apparatus during a first time interval set in the AoN mode; and switching the state of the first electronic apparatus to a doze state during a second time interval set in the AoN mode.

## Description

### [Technical Field]

The disclosure relates to a ranging-based Wi-Fi Aware communication method.

### [Background Art]

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched.

Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

Wi-Fi CERTIFIED Wi-Fi Aware^{™} (Wi-Fi Aware) refers to a technology that extends Wi-Fi functions by enabling rapid navigation, connection, and data exchange with other Wi-Fi apparatuses without the need for traditional network infrastructure, Internet connection, or GPS signals. Wi-Fi Aware may provide a function enabling apparatuses to discover and connect directly to each other without a different type of connection between the apparatuses. Wi-Fi Aware may also be referred to as neighbor awareness networking (NAN).

### [Detailed Description of the Invention]

### [Technical Problem]

The disclosure relates to a method of adaptively adjusting time resources for Wi-Fi Aware communication, based on ranging.

### [Technical Solution]

According to an embodiment of the disclosure, an operation method of a first electronic device supporting Wi-Fi Aware communication may include an operation of, based on at least one event, identifying that the first electronic device operates in an always on NAN (AoN) mode in which the first electronic device maintains a Wi-Fi Aware connection with at least one electronic device, an operation of performing, by the first electronic device, Wi-Fi Aware communication with a second electronic device in a first time period configured in the AoN mode, and an operation of switching a state of the first electronic device to a doze state in a second time period configured in the AoN mode.

A first electronic device supporting Wi-Fi Aware communication according to an embodiment of the disclosure includes a transceiver and a controller. The controller may identify, based on at least one event, that the first electronic device operates in an always on NAN (AoN) mode in which the first electronic device maintains a Wi-Fi Aware connection with at least one electronic device, cause the first electronic device to perform Wi-Fi Aware communication with a second electronic device in a first time period configured in the AoN mode, and switch a state of the first electronic device to a doze state in a second time period configured in the AoN mode.

### [Advantageous Effects]

The method and apparatus according to an embodiment of the disclosure may adaptively adjust time resources by performing Wi-Fi Aware communication based on ranging.

In addition, the method and apparatus according to an embodiment of the disclosure may reduce power consumption during Wi-Fi Aware communication.

### [Brief Description of Drawings]

FIG. 1 illustrates a communication system including an access point and a station.
FIG. 2A illustrates an operation of an access point and a station for configuring a Wi-Fi connection.
FIG. 2B illustrates an operation of a first station and a second station for a Wi-Fi Aware connection.
FIG. 3 is a diagram illustrating time resource allocation for AP communication and Wi-Fi Aware communication of a station according to an embodiment of the disclosure.
FIG. 4 illustrates an example of time resource allocation for Wi-Fi Aware communication according to an embodiment of the disclosure.
FIG. 5 illustrates an example of a report when a Wi-Fi Aware apparatus moves outside a target area or enters a target area according to an embodiment of the disclosure.
FIG. 6 illustrates an example of time resource allocation for describing an always on NAN (AoN) operation according to an embodiment of the disclosure.
FIG. 7 illustrates a communication process between Wi-Fi Aware apparatuses for describing an Always on NAN (AoN) operation according to an embodiment of the disclosure.
FIG. 8 illustrates an example of time resource allocation when a Wi-Fi Aware apparatus moves outside a target area or enters a target area, according to an embodiment of the disclosure.
FIG. 9 illustrates an example of time resource allocation for describing a recovery operation from a NAN ranging session according to an embodiment of the disclosure.
FIG. 10 is a diagram illustrating a NAN ranging procedure according to an embodiment of the disclosure.
FIGS. 11A and 11B are diagrams illustrating a 1:1 NAN ranging procedure according to an embodiment of the disclosure.
FIGS. 12A and 12B are diagrams illustrating a 1:N NAN ranging procedure according to an embodiment of the disclosure.
FIGS. 13A and 13B are diagrams illustrating a 1:N NAN ranging procedure according to another embodiment of the disclosure.
FIG. 14 illustrates a structure of a first electronic device according to an embodiment of the disclosure.
FIG. 15 illustrates a structure of a second electronic device according to an embodiment of the disclosure.

### [Mode for Carrying out the Invention]

Hereinafter, embodiments of the disclosure will be described in detail with reference to the accompanying drawings.

In describing the embodiments, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, according to some embodiments, the "unit" may include one or more processors.

As used herein, each of the terms "station (STA)", "transmitting device", "receiving device", and "electronic device" may also be referred to as a mobile station (MS), a user equipment (UE), a user terminal (UT), a wireless terminal, an access terminal (AT), a terminal, a subscriber unit, a subscriber station (SS), a wireless device, a wireless communication device, a wireless transmit/receive unit (WTRU), a mobile node, a mobile, or other terms. Each of the station, the transmitting device, the receiving device, and the electronic device may include a cellular phone, a smartphone having a wireless communication function, a personal digital assistant (PDA) having a wireless communication function, a wireless modem, a portable computer having a wireless communication function, a photographing device, such as a digital camera, having a wireless communication function, a gaming device having a wireless communication function, a music storage and reproduction home appliance having a wireless communication function, an Internet home appliance capable of wireless Internet access and browsing, and portable units or terminals having integrated combinations of the above functions. Furthermore, each of the station (STA), the transmitting device, the receiving device, and the electronic device may include a machine to machine (M2M) terminal and a machine type communication (MTC) terminal/device, but is not limited thereto. As used herein, each of the station, the transmitting device, the receiving device, and the electronic device may also be referred to simply as "device".

In the disclosure, the terms "wireless local area network (WLAN)" and "Wi-Fi" may be used interchangeably. Although the disclosure describes a WLAN system including at least one access point (AP) and at least one station (STA) for convenience of explanation, embodiments of the disclosure are also applicable to other WLAN systems including, for example, multiple WLANs, peer-to-peer (or independent basic service set) systems, Wi-Fi Direct systems, and/or hot spots.

Wi-Fi CERTIFIED Wi-Fi Aware^{™} (Wi-Fi Aware) refers to a technology that extends Wi-Fi functions by enabling rapid navigation, connection, and data exchange with other Wi-Fi apparatuses without the need for traditional network infrastructure, Internet connection, or GPS signals. Wi-Fi Aware may provide a function that allows apparatuses to discover and connect directly to each other without a different type of connection between the apparatuses. Wi-Fi Aware may also be referred to as neighbor awareness networking (NAN).

Wi-Fi Aware networking may be used to configure a cluster with a surrounding apparatus or to operate by generating a new cluster if the apparatus is a first apparatus in the area. An application may communicate with a Wi-Fi Aware system service which manages Wi-Fi Aware hardware of the apparatus, by using a Wi-Fi Aware application programming interface (API). For example, a Wi-Fi Aware network connection may support a higher processing speed over longer distances where Bluetooth connectivity may not reach. For example, a Wi-Fi Aware network connection may be useful for applications that share large amounts of data between users, such as a photo sharing application.

Hereinafter, the operation principle of the disclosure will be described in detail in conjunction with the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions should be made based on content throughout the specification.

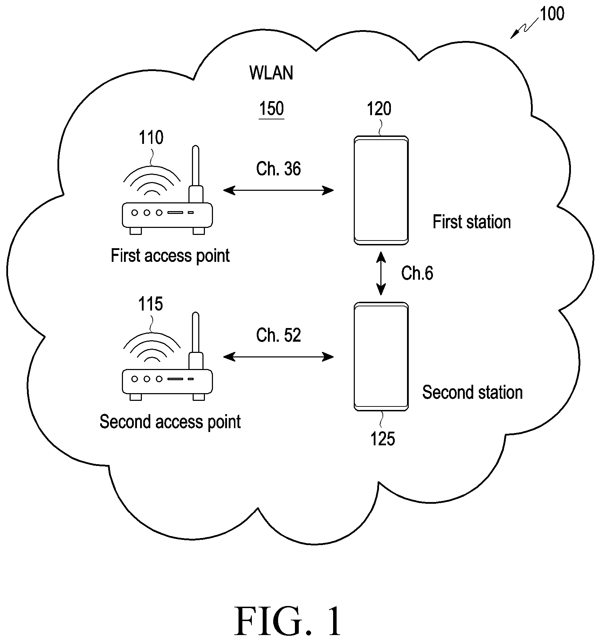

FIG. 1 illustrates a communication system 100 including an access point (AP) and a station (STA).

Referring to FIG. 1, the communication system 100 may include a wireless local area network (WLAN) 150 including multiple wireless access points (APs) 110 and 115 and multiple stations (STAs) 120 and 125. For convenience of explanation, only two access points (APs) 110 and 115 and two stations (STAs) 120 and 125 are illustrated in FIG. 1, but the WLAN 150 may include any number of access points (APs) and any number of stations (STAs).

Each of the stations (STAs) 120 and 125 may also be referred to as a Wi-Fi Aware apparatus or an electronic apparatus. The stations (STAs) 120 and 125 may include at least one transceiver, at least one processor, and/or at least one memory. The at least one memory may include a non-transitory computer-readable medium storing instructions for an access point (AP) 110 or 115 to perform operations according to embodiments of the disclosure.

The access point (AP) 110 or 115 may be an apparatus that enables one or more stations (STAs) to connect to a network (e.g., a local area network (LAN), a wide area network (WAN), a metropolitan area network (MAN), and/or the Internet) by using Wi-Fi, Bluetooth, or any other suitable communication technology. The access point (AP) 110 or 115 may include at least one transceiver, at least one processor, and/or at least one memory. The at least one memory may include a non-transitory computer-readable medium storing instructions for an access point (AP) 110 or 115 to perform operations according to embodiments of the disclosure. According to an embodiment, the access point (AP) 110 or 115 may be implemented as a hardware apparatus or a software apparatus.

At least one transceiver included in the access point (AP) 110 or 115 and/or the station (STA) 120 or 125 may include a Wi-Fi transceiver, a Bluetooth transceiver, a cellular transceiver, and/or other suitable radio frequency (RF) transceiver for transmitting and/or receiving signals. Each transceiver may communicate with other wireless apparatuses in distinct operating frequency bands and/or using distinct communication protocols. For example, the Wi-Fi transceiver may perform communication within the 2.4 GHz frequency band and/or the 5 GHz frequency band in accordance with the IEEE 802.11 standard.

A first station 120 may be connected to a first access point 110 through a first channel (e.g., channel 36 of 5 GHz), and a second station 125 may be connected to a second access point 115 through a second channel (e.g., channel 52 of 5 GHz). The first station 120 may establish a Wi-Fi Aware (or NAN) connection with the second station 125 through a third channel (e.g., channel 6 of 2. GHz).

In the disclosure, the channel used by the station 120 or 125 when communicating with the access point 110 or 115 may be referred to as an AP channel, and a channel used when the stations 120 and 125 communicate with each other may be referred to as a Wi-Fi Aware channel (or an aware channel).

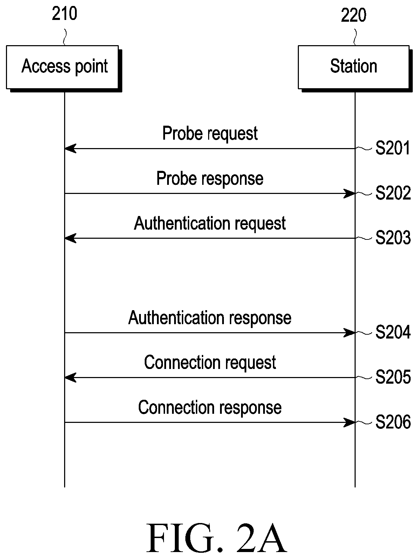

FIG. 2A illustrates an operation of an access point (AP) and a station (STA) for configuring a Wi-Fi connection.

Referring to FIG. 2A, the station 220 may transmit or broadcast a probe request message to the access point 210 (S201). For example, the probe request message may include information regarding at least one communication capability supported by the station 220.

The access point 210 may transmit a probe response message in response to the probe request message (S202). After receiving the probe response message, the station 220 may transmit an authentication request message to the access point 210 (S203). The access point 210 may transmit an authentication response message to the station 220 in response to the authentication request message (S204), and an authentication procedure between the access point 210 and the station 220 may be completed.

When the authentication procedure is completed, the station 220 may transmit an association request message to the access point 210 (S205). For example, the connection request message may include information regarding at least one capability (e.g., according to the IEEE 802.11 standard) to be used for data communication between the station 220 and the access point 210. The access point 210 may generate an association ID (AID) for the station 220 and transmit a connection response message to the station 220 (S206).

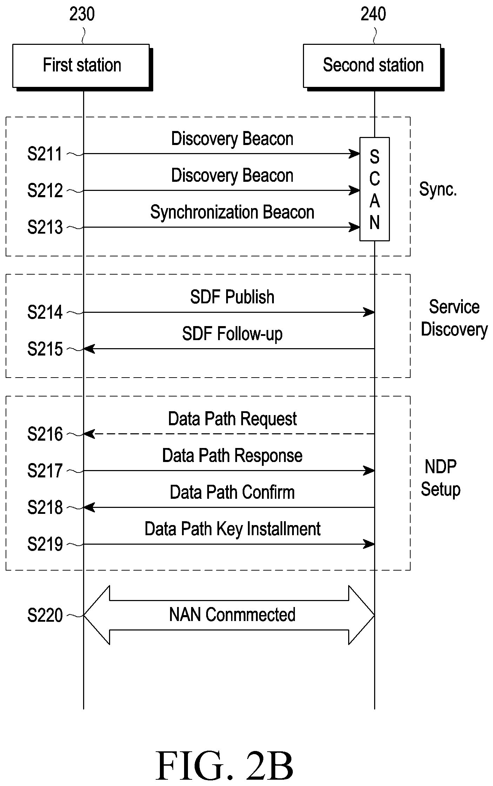

FIG. 2B illustrates an operation of a first station and a second station for a Wi-Fi Aware connection. Each of the first station 230 and the second station 240 may also be referred to as a Wi-Fi Aware apparatus or an electronic apparatus.

Referring to FIG. 2B, when the first station 230 and the second station 240 determine to proceed with a Wi-Fi Aware (or NAN) connection, the first station 230 may transmit at least one discovery beacon message to the second station 240 for synchronization (S211 and S212). The first station 230 may transmit a synchronization beacon message to the second station 240 (S213). The second station 240 may scan at least one discovery beacon message and a synchronization beacon message, and may perform a synchronization procedure (or operation) with the first station 230.

The first station 230 may transmit a service discovery frame (SDF) publish message to the second station 240 for service discovery (S214), and the second station 240 may transmit an SDF follow-up message corresponding to the SDF publish message to the first station 230 (S215).

The second station 240 may transmit a data path request message to the first station 230 for a NAN data path (NDP) setup (S216), and the first station 230 may transmit a data path response message to the second station 240 (S217). The second station 240 may transmit a data path confirm message to the first station 230 (S218), and the first station 230 may transmit a data path key installment message to the second station 240 (S219). When the NDP setup is completed, the first station 230 and the second station 240 may establish a NAN connection (S220).

According to an embodiment, the first station 230 and the second station 240 may exchange information regarding a quality of service (QoS) before the NDP setup procedure. According to an embodiment, the information regarding the QoS may be included in a QoS field of an SDF message (e.g., an SDF publish message, an SDF subscribe message, and/or an SDF follow-up message).

According to an embodiment, the first station 230 and the second station 240 may exchange time synchronization function (TSF) information in a service discovery procedure (e.g., S214 and/or S215) to optimize AP and Wi-Fi Aware scheduling. According to an embodiment, the first station 230 and/or the second station 240 may adjust and/or reduce an access point (AP) period for communication with an AP by using the exchanged TSF information. For example, the AP period may be decreased from 8 slots to 5 slots, based on the TSF information.

According to an embodiment, when both the first station 230 and the second station 240 do not transmit and/or receive traffic requiring a high QoS during communication with an access point, a larger amount of time resources may be allocated to Wi-Fi Aware communication between the first station 230 and the second station 240. According to an embodiment, more time resources may be allocated for Wi-Fi Aware communication to perform one-hop data transmission (e.g., a QuickShare function) between the first station 230 and the second station 240.

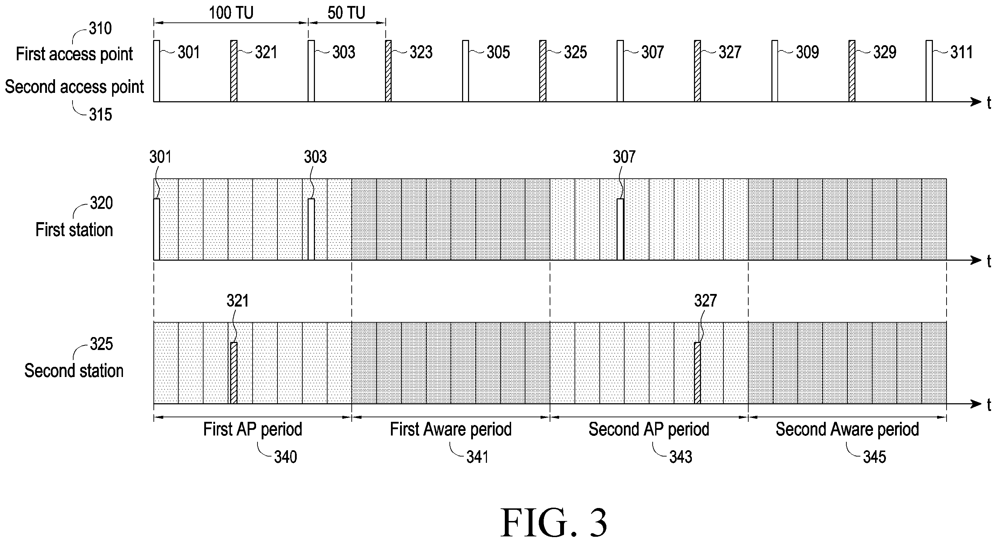

FIG. 3 is a diagram illustrating time resource allocation for AP communication and Wi-Fi Aware communication of a station according to an embodiment of the disclosure.

Referring to FIG. 3, the communication system may include a first access point 310, a first station 320 connected to the first access point 310, a second access point 315, and a second station 325 connected to the second access point 315. In this case, the first station 320 and the second station 325 may perform Wi-Fi Aware communication. Each of the first station 320 and the second station 325 may also be referred to as a Wi-Fi Aware apparatus or an electronic apparatus.

The first access point 310 may broadcast multiple beacons 301, 303, 305, 307, 309, and 311 through a first AP channel (e.g., channel 36), and the second access point 315 may broadcast multiple beacons 321, 323, 325, 327, and 329 through a second AP channel (e.g., channel 52). In the disclosure, a beacon broadcast by an access point may also be referred to as an AP beacon.

The first access point 310 may broadcast each of the multiple beacons 301, 303, 305, 307, 309, and 311 at a configured cycle (e.g., 100 time units (TUs)) through the first AP channel (e.g., channel 36). The second access point 2 315 may broadcast each of the multiple beacons 321, 323, 325, 327, and 329 at a configured cycle (e.g., 100 time units (TUs)) through the second AP channel (e.g., channel 52). For example, the time interval between a beacon broadcast by the first access point 310 and a beacon broadcast by the second access point 2 315 may be configured as 50 TUs.

According to an embodiment, a beacon broadcast by the first access point 310 and/or the second access point 315 may include at least one of identity information, such as a service set identifier (SSID) or a basic service set identifier (BSSID), frequency information related to transmission and reception of data, and frequency type information.

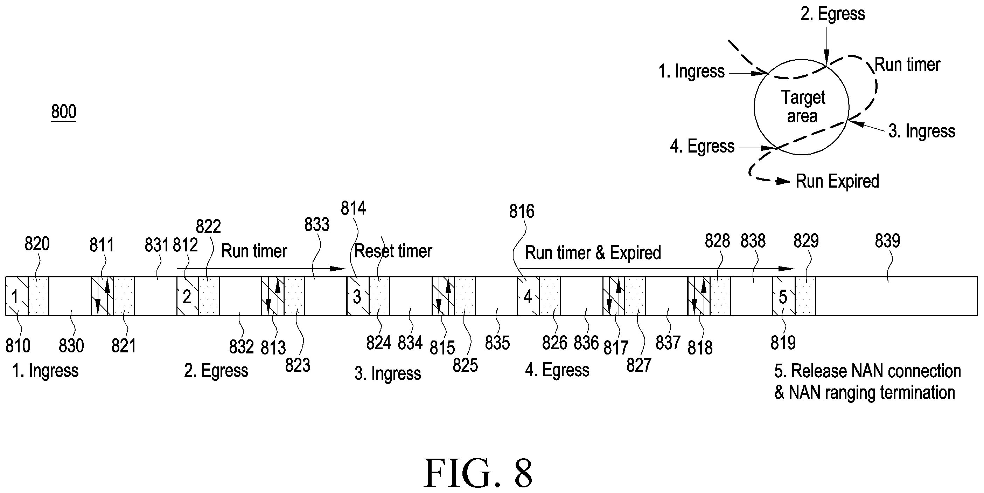

According to an embodiment, 1 slot, which is a time resource allocation unit for AP communication and Wi-Fi Aware communication, may be configured as 16 TUs. In FIG. 3, 8 slots (=128 TUs) may be allocated to each of the AP periods 340 and 343 for AP communication, and 8 slots (=128 TUs) may be allocated to each of the Aware periods 341 and 345 for Wi-Fi Aware communication.

The first station 320 may receive two beacons 301 and 303 broadcast by the first access point 310 during the first AP period 340. During a first Aware period 341, the first station 320 may perform Wi-Fi Aware communication with the second station 325, and may not receive one beacon 305 broadcast by the first access point 310.

The first station 320 may receive one beacon 307 broadcast by the first access point 310 during a second AP period 343. The first station 320 may perform Wi-Fi Aware communication with the second station 325 during the second Aware period 345, and may not receive two beacons 309 and 311 broadcast by the first access point 310.

The second station 325 may receive one beacon 321 or 303 broadcast by the second access point 315 during the first AP period 340. The second station 325 may perform Wi-Fi Aware communication with the first station 320 during the first Aware period 341, and may not receive two beacons 323 and 325 broadcast by the second access point 315.

The second station 325 may receive one beacon 327 broadcast by the second access point 315 during the second AP period 343. The second station 325 may perform Wi-Fi Aware communication with the first station 320 during the second Aware period 345, and may not receive one beacon 329 broadcast by the second access point 315. In FIG. 3, each of the first station 320 and the second station 325 may not receive one or two AP beacons during Wi-Fi Aware communication.

The disclosure proposes always-on NAN (AoN) that allows a Wi-Fi Aware apparatus (or electronic apparatus) to perform Wi-Fi Aware communication by omitting or simplifying a connection setup procedure.

The Wi-Fi Aware apparatus may perform an immediate reaction and/or operation through AoN to improve the initial NAN configuration speed. However, the Wi-Fi Aware apparatus may consume more energy than legacy operations during AoN, and may require additional time resource allocation for the NAN. According to an embodiment, the Wi-Fi Aware apparatus may use a doze state during a process of maintaining a current NAN connection through AoN, thereby reducing energy consumption for the NAN connection.

To improve the initial NAN configuration speed, unsynchronized discovery (USD) or NAN instant communication may be performed. In addition, for continuity services such as in-app collaboration, or when using a NAN connection intermittently at long time intervals, the NAN connection may be maintained with minimal energy.

According to an embodiment, an event for the Wi-Fi Aware apparatus to perform AoN may be defined. For example, the Wi-Fi Aware apparatus may perform AoN based on an application (screen) being turned off or a user (physical) action. For example, the Wi-Fi Aware apparatus may perform AoN to maintain the NAN connection after terminating data communication (e.g., QuickShare) with another apparatus. For example, the Wi-Fi Aware apparatus may perform AoN when roaming to a mobile apparatus during the NAN connection. For example, the Wi-Fi Aware apparatus may perform AoN while the screen is turned off when a mobile apparatus uses in-app collaboration.

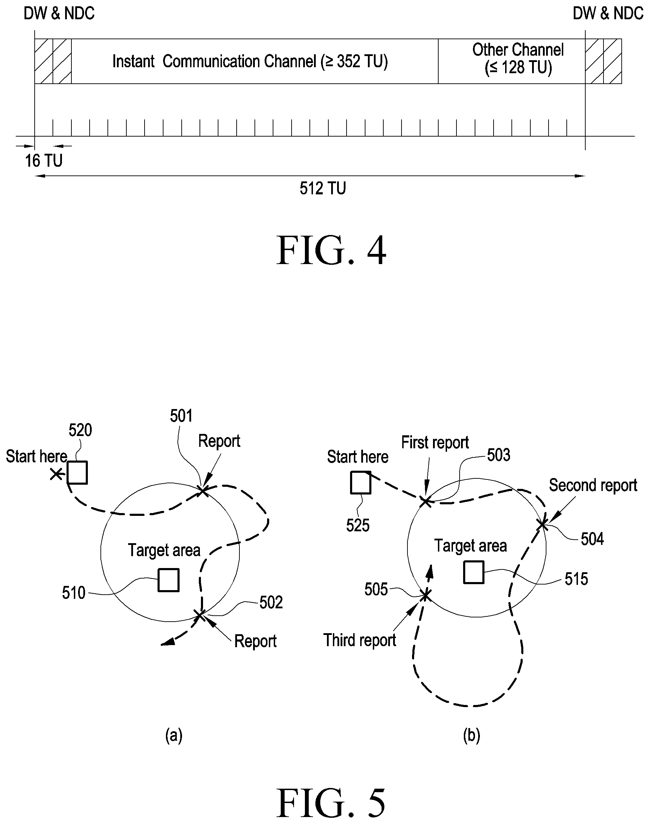

FIG. 4 illustrates an example of time resource allocation for Wi-Fi Aware communication according to an embodiment of the disclosure.

A Wi-Fi Aware apparatus may perform negotiation for a NAN (or Wi-Fi Aware) data path with at least one Wi-Fi Aware apparatus, and may perform NAN (or Wi-Fi Aware) data communication with the at least one Wi-Fi Aware apparatus.

Referring to FIG. 4, the Wi-Fi Aware apparatus may perform a negotiation procedure for a NAN data path during a discovery window (DW) period and/or a NAN discovery cluster (NDC) period that is temporally synchronized with at least one Wi-Fi Aware apparatus. According to an embodiment, the DW may be implemented at predetermined time intervals. For example, each DW period and/or NDC period may occupy a time period of 32 time units (TUs) within a configured channel (e.g., channel 6 of 2.4 GHz). According to an embodiment, an NDC period may be a period in which intra-group (or cluster) control information and/or group information is transmitted/received to assist a DW period.

After the DW period and/or the NDC period, the time period for NAN instant communication may be configured to be 352 TUs or more, for example. After the NAN instant communication period, a time period for another channel (e.g., an AP channel) may be configured to be 128 TUs or less, for example. For example, the period for the DW period and/or the NDC period, the NAN instant communication period, and another channel (e.g., an AP channel) may be configured to 512 TUs.

After a time period for another channel (e.g., an AP channel), time resources for the DW period and/or the NDC period may be reallocated.

According to an embodiment, the Wi-Fi Aware apparatus may identify the presence of another Wi-Fi Aware apparatus and information about the other Wi-Fi Aware apparatus through initial discovery and/or data path setup. For example, the Wi-Fi Aware apparatus may identify, through initial discovery and/or data path configuration, a topology of and/or a distance to another Wi-Fi Aware apparatus that configures a Wi-Fi Aware connection.

According to an embodiment, the Wi-Fi Aware apparatus may perform initial Wi-Fi Aware connection configuration such as USD or NAN instant communication, and may identify ranging availability.

According to an embodiment, the Wi-Fi Aware apparatus may initiate a ranging session when necessary to maintain AoN. According to an embodiment, the Wi-Fi Aware apparatus may configure a ranging session on at least one slot.

FIG. 5 illustrates an example of a report when a Wi-Fi Aware apparatus moves outside a target area or enters a target area according to an embodiment of the disclosure.

Referring to part (a) of FIG. 5, a first Wi-Fi Aware apparatus 510 may be located in a target area, and a second Wi-Fi Aware apparatus 520 may move inside or outside the target area. The target area may be an area in which the first Wi-Fi Aware apparatus 510 and the second Wi-Fi Aware apparatus 520 may perform NAN ranging with each other. If the second Wi-Fi Aware apparatus 520 moves outside the target area, the first Wi-Fi Aware apparatus 510 and the second Wi-Fi Aware apparatus 520 may not be able to perform NAN ranging.

When the second Wi-Fi Aware apparatus 520 moves from inside to outside the target area at a first point 501 or a second point 502, the second Wi-Fi Aware apparatus 520 may report (or transmit) a message indicating that the second Wi-Fi Aware apparatus 520 has moved to the outside of the target area to the first Wi-Fi Aware apparatus 510.

Referring to part (b) of FIG. 5, a first Wi-Fi Aware apparatus 515 may be located in B area, and a second Wi-Fi Aware apparatus 525 may move inside or outside the target area. The target area may be an area in which the first Wi-Fi Aware apparatus 515 and the second Wi-Fi Aware apparatus 525 may perform NAN ranging with each other. If the second Wi-Fi Aware apparatus 525 moves outside the target area, the first Wi-Fi Aware apparatus 515 and the second Wi-Fi Aware apparatus 525 may not be able to perform NAN ranging.

When the second Wi-Fi Aware apparatus 525 enters the target area at a third point 503, a fourth point 504, or a fifth point 505, the second Wi-Fi Aware apparatus 525 may report (or transmit) a message indicating that the second Wi-Fi Aware apparatus 520 has entered the target area to the first Wi-Fi Aware apparatus 515.

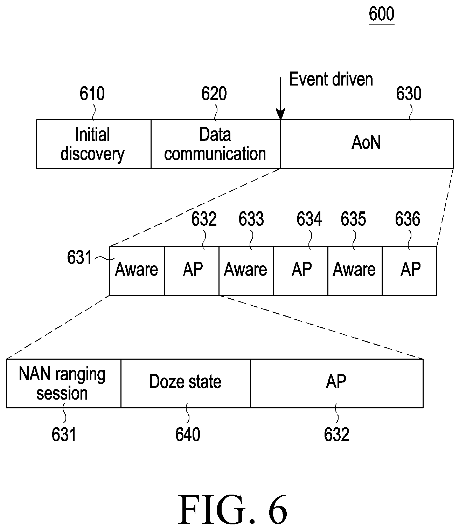

FIG. 6 illustrates an example of time resource allocation for describing an always on NAN (AoN) operation according to an embodiment of the disclosure.

Referring to FIG. 6, the entire time period 600 for Wi-Fi Aware communication may include a first period 610 for initial discovery, a second period 620 for Wi-Fi Aware (or NAN) data communication, and a third period 630 for AoN.

The Wi-Fi Aware apparatus may perform initial discovery in the first period 610 to identify ranging information and/or Wi-Fi Aware communication availability (NAN availability). The Wi-Fi Aware apparatus may transmit a service discovery frame (SDF) publish message to another Wi-Fi Aware apparatus for service discovery, and may receive an SDF follow-up message corresponding to the SDF publish message from the other Wi-Fi Aware apparatus.

The Wi-Fi Aware apparatus may perform Wi-Fi Aware (or NAN) data communication with another Wi-Fi Aware apparatus in the second period 620.

When at least one event is triggered, the Wi-Fi Aware apparatus may perform an associated operation in an AoN state in the third period 630. According to an embodiment, an event that triggers the Wi-Fi Aware apparatus to perform AoN may be defined. For example, the Wi-Fi Aware apparatus may perform AoN based on an application (screen) being turned off or a user (physical) action. For example, the Wi-Fi Aware apparatus may perform AoN to maintain the NAN connection after terminating data communication (e.g., QuickShare) with another apparatus. For example, the Wi-Fi Aware apparatus may perform AoN when roaming to a mobile apparatus during the NAN connection. For example, the Wi-Fi Aware apparatus may perform AoN while the screen is turned off when a mobile apparatus uses in-app collaboration.

The third period 630 for AoN may include periods 631, 633, and 635 for Wi-Fi Aware (or NAN) communication and AP periods 632, 634, and 636 for Wi-Fi communication through an access point (AP). According to an embodiment, a time resource allocated for each of the periods 631, 633, and 635 for Wi-Fi Aware (or NAN) communication may be identically or differently configured. According to an embodiment, a time resource allocated for each of the AP periods 632, 634, and 636 may be identically or differently configured.

According to an embodiment, a time period 640 for a doze state for the Wi-Fi Aware apparatus may be configured between a first Wi-Fi Aware (or NAN) period 631 for a NAN ranging session and a first AP period 632 for Wi-Fi communication.

According to an embodiment, the time period 640 for the doze state may be configured as a time period from termination of the NAN ranging session to before a start of AP connection. According to an embodiment, the Wi-Fi Aware apparatus in the doze state may be unable to receive and/or transmit data during the Wi-Fi Aware connection.

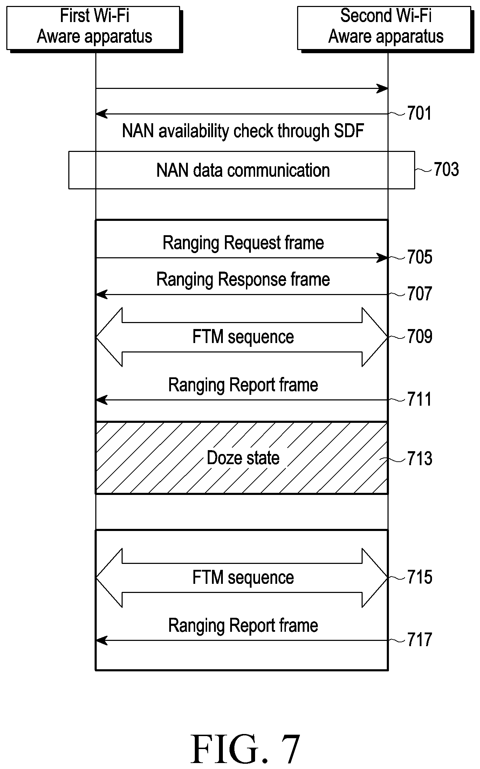

FIG. 7 illustrates a communication process between Wi-Fi Aware apparatuses for describing an Always on NAN (AoN) operation according to an embodiment of the disclosure.

Referring to FIG. 7, in operation 701, a first Wi-Fi Aware apparatus may identify Wi-Fi Aware communication availability (NAN Availability) with a second Wi-Fi Aware apparatus through service discovery frame (SDF) message exchange. The first Wi-Fi Aware apparatus may transmit an SDF publish message to the second Wi-Fi Aware apparatus for service discovery, and may receive an SDF follow-up message corresponding to the SDF publish message from the second Wi-Fi Aware apparatus.

In operation 703, the first Wi-Fi Aware apparatus may perform NAN data communication with the second Wi-Fi Aware apparatus.

In operation 705, the first Wi-Fi Aware apparatus may transmit a ranging request frame to the second Wi-Fi Aware apparatus. In operation 707, the first Wi-Fi Aware apparatus may receive a ranging response frame (Ranging Response frame) corresponding to the ranging request frame from the second Wi-Fi Aware apparatus.

In operation 709, the first Wi-Fi Aware apparatus may transmit and/or receive, to and/or from the second Wi-Fi Aware apparatus, a fine time measurement (FTM) sequence and a corresponding Ack message. In operation 711, the first Wi-Fi Aware apparatus may receive, from the second Wi-Fi Aware apparatus, a ranging report frame regarding ranging result information.

In operation 713, the first Wi-Fi Aware apparatus and/or the second Wi-Fi Aware apparatus may operate in the doze state.

Subsequently, in operation 715, the first Wi-Fi Aware apparatus may transmit and/or receive, to and/or from the second Wi-Fi Aware apparatus, an FTM sequence and a corresponding Ack message. In operation 717, the first Wi-Fi Aware apparatus may receive, from the second Wi-Fi Aware apparatus, a ranging report frame regarding ranging result information.

FIG. 8 illustrates an example of time resource allocation when a Wi-Fi Aware apparatus moves outside a target area or enters a target area, according to an embodiment of the disclosure.

Referring to FIG. 8, a target area may be configured based on a target distance (e.g., a distance based on a distance threshold) from the first Wi-Fi Aware apparatus to the second Wi-Fi Aware apparatus. According to an embodiment, the first Wi-Fi Aware apparatus may be a master apparatus, and the second Wi-Fi Aware apparatus may be a non-master apparatus.

In the case that the second Wi-Fi Aware apparatus moves around the target area, a state (ranging indication condition) of the first Wi-Fi Aware apparatus and the second Wi-Fi Aware apparatus may be configured as follows, depending on the location of the second Wi-Fi Aware apparatus.

Continuous: The ranging result is continuously reported. It is identified that the distance between the first Wi-Fi Aware apparatus and the second Wi-Fi Aware apparatus is smaller than a threshold value.

Ingress: A ranging result is reported when the second Wi-Fi Aware apparatus enters the target area. (When the distance between the first Wi-Fi Aware apparatus and the second Wi-Fi Aware apparatus decreases from a value equal to or greater than a threshold value to a value equal to or less than the threshold value)

Egress: When the second Wi-Fi Aware apparatus moves outside the target area, the ranging result is reported. (When the distance between the first Wi-Fi Aware apparatus and the second Wi-Fi Aware apparatus increases from a value equal to or less than a threshold value to a value equal to or greater than the threshold value)

Both Ingress and Egress: The ranging result is reported. (If the distance between the first Wi-Fi Aware apparatus and the second Wi-Fi Aware apparatus is equal to a threshold value)

Referring to FIG. 8, the entire time period 800 may include time periods 810 to 819 for a NAN ranging session, time periods 820 to 829 for the doze state, and time periods 830 to 839 for an AP.

In a first period 810 for a NAN ranging session, the first Wi-Fi Aware apparatus and/or the second Wi-Fi Aware apparatus may identify that the second Wi-Fi Aware apparatus has entered the target area. According to an embodiment, in the first period 810 for a NAN ranging session, the second Wi-Fi Aware apparatus may transmit, to the first Wi-Fi Aware apparatus, a report regarding entry into the target area. In a first period 820 for a doze state, the first Wi-Fi Aware apparatus and/or the second Wi-Fi Aware apparatus may operate in the doze state. In a first period 830 for an AP, the first Wi-Fi Aware apparatus and/or the second Wi-Fi Aware apparatus may perform Wi-Fi communication.

In a second period 811 for a NAN ranging session, the first Wi-Fi Aware apparatus and the second Wi-Fi Aware apparatus may perform NAN ranging. In a second period 821 for a doze state, the first Wi-Fi Aware apparatus and/or the second Wi-Fi Aware apparatus may operate in the doze state. In a second period 831 for an AP, the first Wi-Fi Aware apparatus and/or the second Wi-Fi Aware apparatus may perform Wi-Fi communication.

In a third period 812 for a NAN ranging session, the first Wi-Fi Aware apparatus and/or the second Wi-Fi Aware apparatus may identify that the second Wi-Fi Aware apparatus has moved outside the target area. According to an embodiment, in the third period 812 for a NAN ranging session, the second Wi-Fi Aware apparatus may transmit, to the first Wi-Fi Aware apparatus, a report regarding movement to the outside of the target area. According to an embodiment, in the third period 812 for a NAN ranging session, the first Wi-Fi Aware apparatus and/or the second Wi-Fi Aware apparatus may start a timer when the second Wi-Fi Aware apparatus moves outside the target area. In a third period 822 for a doze state, the first Wi-Fi Aware apparatus and/or the second Wi-Fi Aware apparatus may operate in the doze state. In a third period 832 for the AP, the first Wi-Fi Aware apparatus and/or the second Wi-Fi Aware apparatus may perform Wi-Fi communication.

In a fourth period 813 for a NAN ranging session, the first Wi-Fi Aware apparatus and the second Wi-Fi Aware apparatus may perform NAN ranging. In a fourth period 823 for a doze state, the first Wi-Fi Aware apparatus and/or the second Wi-Fi Aware apparatus may operate in the doze state. In a fourth period 833 for an AP, the first Wi-Fi Aware apparatus and/or the second Wi-Fi Aware apparatus may perform Wi-Fi communication.

In a fifth period 814 for a NAN ranging session, the first Wi-Fi Aware apparatus and/or the second Wi-Fi Aware apparatus may identify that the second Wi-Fi Aware apparatus has entered the target area. According to an embodiment, in the fifth period 814 for a NAN ranging session, the second Wi-Fi Aware apparatus may transmit, to the first Wi-Fi Aware apparatus, a report regarding entry into the target area. According to an embodiment, in the fifth period 814 for a NAN ranging session, the first Wi-Fi Aware apparatus and/or the second Wi-Fi Aware apparatus may reset the timer started in the third period 812. In a fifth period 825 for a doze state, the first Wi-Fi Aware apparatus and/or the second Wi-Fi Aware apparatus may operate in the doze state. In a fifth period 834 for an AP, the first Wi-Fi Aware apparatus and/or the second Wi-Fi Aware apparatus may perform Wi-Fi communication.

In a sixth period 815 for a NAN ranging session, the first Wi-Fi Aware apparatus and the second Wi-Fi Aware apparatus may perform NAN ranging. In a sixth period 825 for a doze state, the first Wi-Fi Aware apparatus and/or the second Wi-Fi Aware apparatus may operate in the doze state. In a sixth period 835 for an AP, the first Wi-Fi Aware apparatus and/or the second Wi-Fi Aware apparatus may perform Wi-Fi communication.

In a seventh period 816 for a NAN ranging session, the first Wi-Fi Aware apparatus and/or the second Wi-Fi Aware apparatus may identify that the second Wi-Fi Aware apparatus has moved outside the target area. According to an embodiment, in the seventh period 816 for a NAN ranging session, the second Wi-Fi Aware apparatus may transmit, to the first Wi-Fi Aware apparatus, a report regarding movement to the outside of the target area. According to an embodiment, in the seventh period 816 for a NAN ranging session, the first Wi-Fi Aware apparatus and/or the second Wi-Fi Aware apparatus may start a timer when the second Wi-Fi Aware apparatus moves outside the target area. In a seventh period 826 for a doze state, the first Wi-Fi Aware apparatus and/or the second Wi-Fi Aware apparatus may operate in the doze state. In a seventh period 836 for an AP, the first Wi-Fi Aware apparatus and/or the second Wi-Fi Aware apparatus may perform Wi-Fi communication.

Thereafter, the timer may expire in a tenth period 819 for a NAN ranging session. In the tenth period 819 for a NAN ranging session, the first Wi-Fi Aware apparatus and/or the second Wi-Fi Aware apparatus may release a NAN connection and terminate NAN ranging.

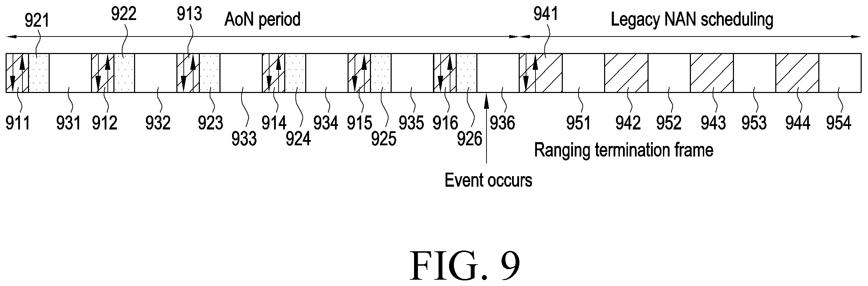

FIG. 9 illustrates an example of time resource allocation for describing a recovery operation from a NAN ranging session according to an embodiment of the disclosure.

The first Wi-Fi Aware apparatus may recover from AoN, based on at least one event. For example, the first Wi-Fi Aware apparatus may recover from the AoN and restart a data sharing application (e.g., QuickShare). For example, the first Wi-Fi Aware apparatus may recover from the AoN and perform screen on for using in-app collaboration.

Referring to FIG. 9, in an AoN period, the first Wi-Fi Aware apparatus may perform AoN-related operations, and may not perform AoN-related operations in a legacy NAN scheduling period.

In a period (each of periods 911 to 916) for a NAN ranging session within the AoN period, the first Wi-Fi Aware apparatus and the second Wi-Fi Aware apparatus may perform NAN ranging. In a period (each of periods 921 to 926) for a doze state within the AoN period, the first Wi-Fi Aware apparatus and/or the second Wi-Fi Aware apparatus may operate in the doze state. In a period (each of the periods 931 to 936) for an AP within the AoN period, the first Wi-Fi Aware apparatus and/or the second Wi-Fi Aware apparatus may perform Wi-Fi communication.

In a period 941 for a NAN ranging session, the first Wi-Fi Aware apparatus and/or the second Wi-Fi Aware apparatus may transmit a ranging termination frame to terminate the ranging session. According to an embodiment, the first Wi-Fi Aware apparatus and the second Wi-Fi Aware apparatus may transmit and receive a ranging termination frame and a corresponding response frame to recover from AoN to a legacy NAN scheduling operation.

In a period (each of periods 941 to 944) for a NAN ranging session within a legacy NAN scheduling period, the first Wi-Fi Aware apparatus and the second Wi-Fi Aware apparatus may perform NAN ranging. In a period (each of periods 951 to 954) for an AP within a legacy NAN scheduling period, the first Wi-Fi Aware apparatus and the second Wi-Fi Aware apparatus may perform Wi-Fi communication.

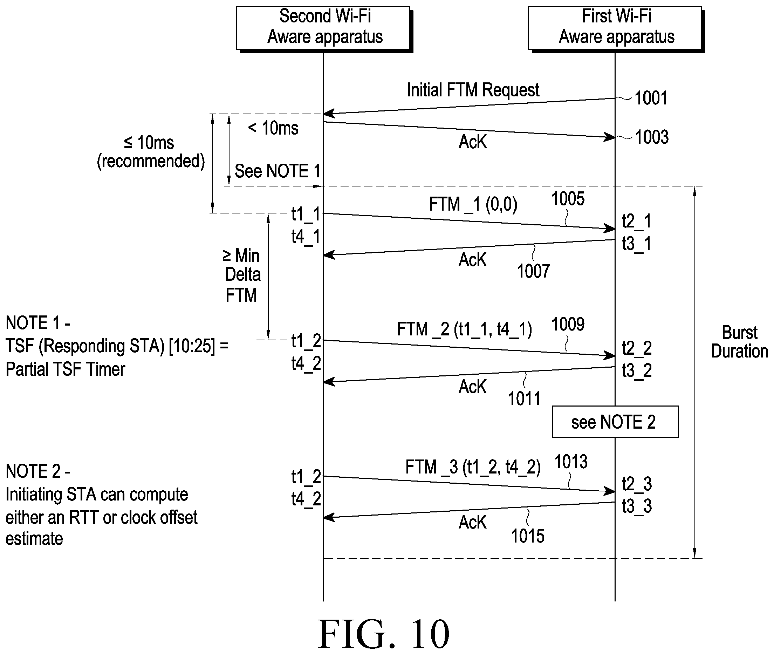

FIG. 10 is a diagram illustrating a NAN ranging procedure according to an embodiment of the disclosure.

The NAN ranging procedure illustrated in FIG. 10 may be configured as, for example, number of burst exponent = 0 (Single Burst), FTM (FTMs per burst) = 3, burst duration = 128ms, and burst period = 512ms.

According to an embodiment, an optimized burst duration and an adaptive burst period for an AoN operation may be configured. According to an embodiment, a burst duration for the AoN operation may be determined based on the number of burst exponents and FTMs per burst (K). According to an embodiment, the burst duration may be minimized to maximize the doze period.

According to an embodiment, a burst period may be adaptively configured, based on a state (e.g., an ingress/egress state) according to the location of a Wi-Fi Aware apparatus. According to an embodiment, when a Wi-Fi Aware apparatus enters a target area (in an ingress state), a burst period may be increased (e.g., 512ms or 1024ms). According to an embodiment, if a Wi-Fi Aware apparatus moves outside the target area (in an egress state), a burst period may decrease (e.g., 128ms). According to an embodiment, message exchange between Wi-Fi Aware apparatuses may be required to change a NAN ranging schedule.

Referring to FIG. 10, in operation 1001, a first Wi-Fi Aware apparatus (or initiating station (STA)) may transmit an initial fine time measurement (FTM) request to a second Wi-Fi Aware apparatus (or responding STA). In operation 1003, the first Wi-Fi Aware apparatus may receive an Ack message regarding the initial FTM request from the second Wi-Fi Aware apparatus.

In operation 1005, the second Wi-Fi Aware apparatus may transmit a first FTM (FTM_1(0,0)) to the first Wi-Fi Aware apparatus at a first time point (t1_1). The first FTM (FTM_1(0,0)) may include information regarding a reference time point (or initial time point) (0,0). The first Wi-Fi Aware apparatus may receive the first FTM (FTM_1(0,0)) at a second time point (t2_1). In operation 1007, the first Wi-Fi Aware apparatus may transmit an Ack message for the first FTM (FTM_1(0,0)) to the second Wi-Fi Aware apparatus at a third time point (t3_1). The second Wi-Fi Aware apparatus may receive an Ack message regarding the first FTM (FTM_1(0,0)) at a fourth time point (t4_1).

In operation 1009, the second Wi-Fi Aware apparatus may transmit a second FTM (FTM_2(t1_1, t4_1)) to the first Wi-Fi Aware apparatus at a fifth time point (t1_2). The second FTM (FTM_2(t1_1, t4_1)) may include information regarding the second time point (t2_1) and the fourth time point (t4_1). The first Wi-Fi Aware apparatus may receive the second FTM (FTM_2(t1_1, t4_1)) at a sixth time point (t2_2). In operation 1011, the first Wi-Fi Aware apparatus may transmit an Ack message regarding the second FTM (FTM_2(t1_1, t4_1)) to the second Wi-Fi Aware apparatus at a seventh time point (t3_2). The second Wi-Fi Aware apparatus may receive an Ack message regarding the second FTM (FTM_2(t1_1, t4_1)) at an eighth time point (t4_2).

According to an embodiment, the first Wi-Fi Aware apparatus may calculate a round-trip time (RTT) and/or a clock offset estimate, based on the first FTM (FTM_1(0,0)) and the second FTM (FTM_2(t1_1, t4_1)).

In operation 1013, the second Wi-Fi Aware apparatus may transmit a third FTM (FTM_3(t1_2, t4_2)) to the first Wi-Fi Aware apparatus at a ninth time point (t1_3). The third FTM (FTM_3(t1_2, t4_2)) may include information regarding the fifth time point (t2_1) and the eighth time point (t4_2). The first Wi-Fi Aware apparatus may receive the third FTM (FTM_3(t1_2, t4_2)) at a tenth time point (t2_3). In operation 1015, the first Wi-Fi Aware apparatus may transmit an Ack message regarding the third FTM (FTM_3(t1_2, t4_2)) to the second Wi-Fi Aware apparatus at a 11-th time point (t3_3). The second Wi-Fi Aware apparatus may receive an Ack message regarding the third FTM (FTM_3(t1_2, t4_2)) at a 12-th time point (t4_3).

The first Wi-Fi Aware apparatus and the second Wi-Fi Aware apparatus may calculate the distance between the first Wi-Fi Aware apparatus and the second Wi-Fi Aware apparatus through multiple FTM and Ack message exchanges.

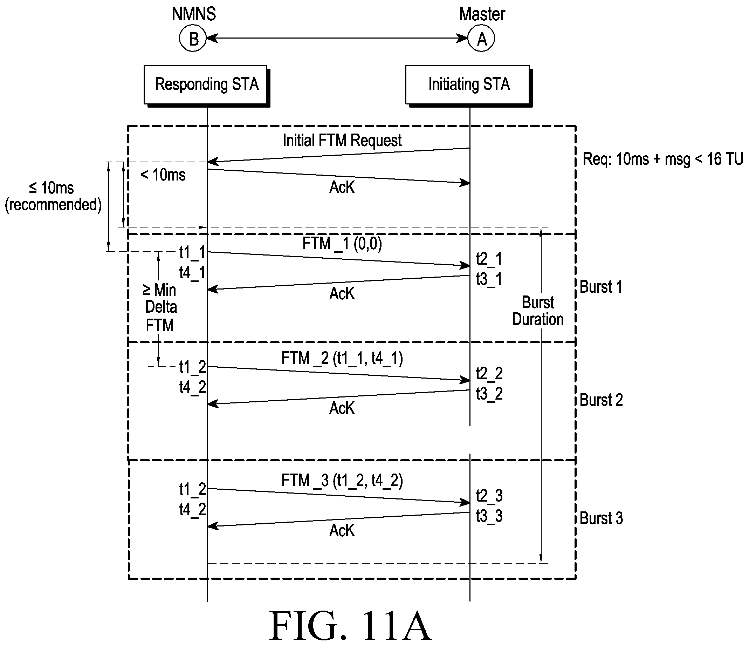

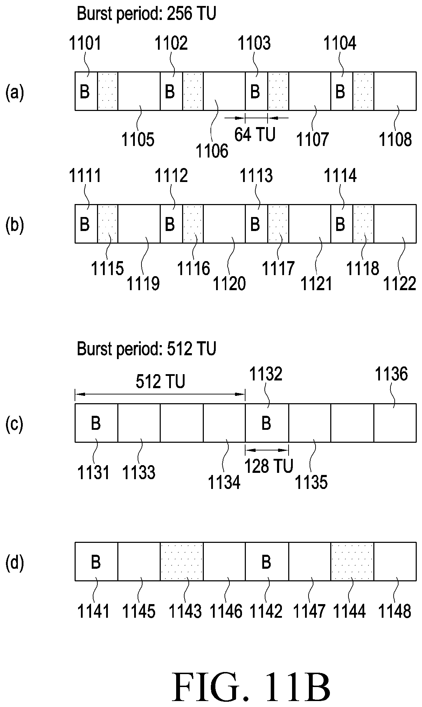

FIGS. 11A and 11B are diagrams illustrating a 1:1 NAN ranging procedure according to an embodiment of the disclosure.

In FIGS. 11A and 11B, the first Wi-Fi Aware apparatus may be a master apparatus, and the second Wi-Fi Aware apparatus may be a non-master apparatus. The first Wi-Fi Aware apparatus and the second Wi-Fi Aware apparatus may perform a 1:1 NAN ranging procedure.

Referring to FIGS. 10 and 11A, the first Wi-Fi Aware apparatus A may transmit an initial FTM request to the second Wi-Fi Aware apparatus B, and may receive an Ack message regarding the initial FTM request from the second Wi-Fi Aware apparatus B. Thereafter, the first Wi-Fi Aware apparatus A and the second Wi-Fi Aware apparatus B may perform 1:1 NAN ranging by transmitting and/or receiving multiple FTM and Ack messages, in a substantially same manner as the above-described operations in FIG. 10.

Referring to FIG. 11A and part (a) of FIG. 11B, in the case of a burst period of 256 TUs, the first Wi-Fi Aware apparatus and the second Wi-Fi Aware apparatus may perform NAN ranging in a period (each of periods 1101, 1102, 1103, and 1104) for a NAN ranging session. For example, the period (each of the periods 1101, 1102, 1103, and 1104) for a NAN ranging session may be configured as 64 TUs. In a period (each of periods 1105, 1106, 1107, and 1108) for an AP, the first Wi-Fi Aware apparatus and/or the second Wi-Fi Aware apparatus may perform Wi-Fi communication.

Referring to FIG. 11A and part (b) of FIG. 11B, in the case of a burst period of 256 TUs, the first Wi-Fi Aware apparatus and the second Wi-Fi Aware apparatus may perform NAN ranging in a period (each of periods 1111, 1112, 1113, and 1114) for a NAN ranging session. In a period (each of periods 1115, 1116, 1117, and 1118) for a doze state, the first Wi-Fi Aware apparatus and/or the second Wi-Fi Aware apparatus may operate in the doze state. For example, in a period (each of periods 1111, 1112, 1113, and 1114) for a NAN ranging session and in a period (each of periods 1115, 1116, 1117, and 1118) for a doze state may be configured as 64 TUs. In a period (each of periods 1119, 1120, 1121, and 1122) for an AP, the first Wi-Fi Aware apparatus and/or the second Wi-Fi Aware apparatus may perform Wi-Fi communication.

Referring to FIG. 11A and part (c) of FIG. 11B, in the case of a burst period of 512 TUs, the first Wi-Fi Aware apparatus and the second Wi-Fi Aware apparatus may perform NAN ranging in a period (each of periods 1131, and 1132) for a NAN ranging session. For example, the period (each of the periods 1131, and 1132) for a NAN ranging session may be configured as 128 TUs. In a period (each of periods 1133, 1134, 1135, and 1136) for an AP, the first Wi-Fi Aware apparatus and/or the second Wi-Fi Aware apparatus may perform Wi-Fi communication.

Referring to FIG. 11A and part (d) of FIG. 11B, in the case of a burst period of 512 TUs, the first Wi-Fi Aware apparatus and the second Wi-Fi Aware apparatus may perform NAN ranging in a period (each of periods 1141 and 1142) for a NAN ranging session. In a period (each of periods 1143 and 1144) for a doze state, the first Wi-Fi Aware apparatus and/or the second Wi-Fi Aware apparatus may operate in the doze state. For example, in a period (each of periods 1141 and 1142) for a NAN ranging session and in a period (each of periods 1143 and 1144) for a doze state may be configured as 128 TUs. In a period (each of periods 1145, 1146, 1147, and 1148) for an AP, the first Wi-Fi Aware apparatus and/or the second Wi-Fi Aware apparatus may perform Wi-Fi communication.

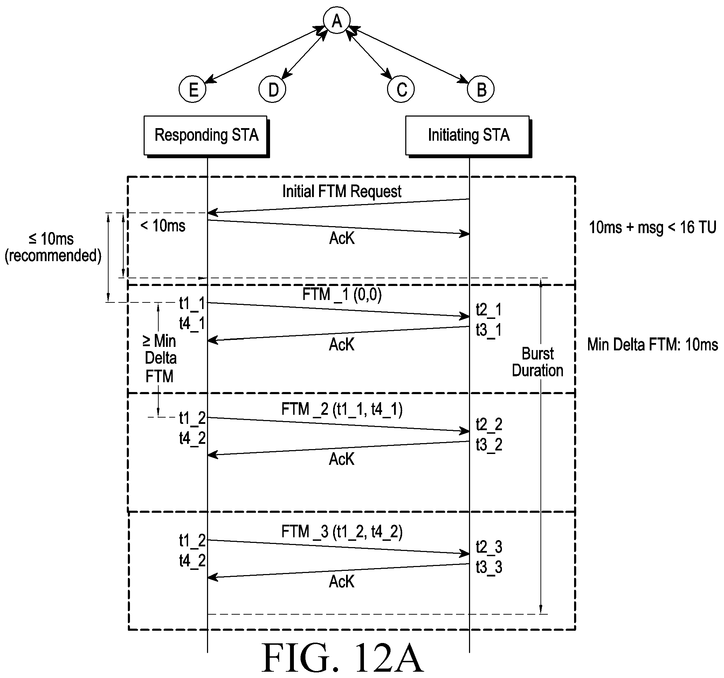

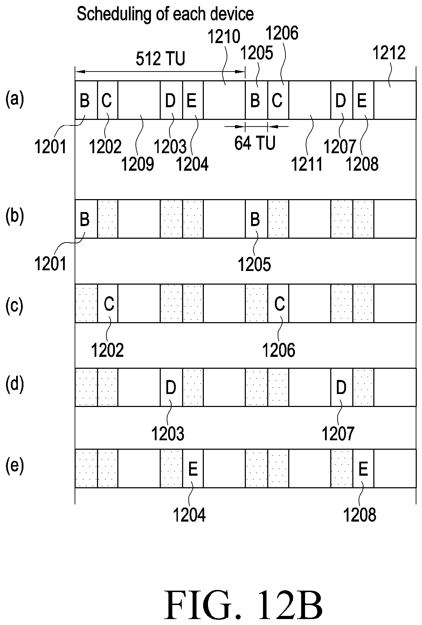

FIGS. 12A and 12B are diagrams illustrating a 1:N NAN ranging procedure according to an embodiment of the disclosure.

In FIGS. 12A and 12B, a first Wi-Fi Aware apparatus A may perform a 1:N NAN ranging procedure with a second Wi-Fi Aware apparatus B, a third Wi-Fi Aware apparatus C, a fourth Wi-Fi Aware apparatus D, and a fifth Wi-Fi Aware apparatus E.

Referring to FIGS. 10 and 12A, the first Wi-Fi Aware apparatus A may transmit an initial FTM request to at least one of the second Wi-Fi Aware apparatus B to the fifth Wi-Fi Aware apparatus E. The first Wi-Fi Aware apparatus A may receive an Ack message for the initial FTM request from at least one of the second Wi-Fi Aware apparatus B to the fifth Wi-Fi Aware apparatus E. Thereafter, the first Wi-Fi Aware apparatus A may perform 1:N NAN ranging by transmitting and/or receiving multiple FTM and Ack messages to and/or from at least one of the second Wi-Fi Aware apparatus B to the fifth Wi-Fi Aware apparatus E, in a substantially the same manner as the operations in FIG. 10 described above.

Referring to FIG. 12A and part (a) of FIG. 12B, in the case of a burst period of 512 TUs, the first Wi-Fi Aware apparatus A may perform NAN ranging with each of the second Wi-Fi Aware apparatus B to the fifth Wi-Fi Aware apparatus E in a period (each of periods 1201 to 1208) for a NAN ranging session. For example, the period (each of periods 1201 to 1208) for the NAN ranging session may be configured to be 64 TUs. For example, in a first period 1201 for a NAN ranging session, the first Wi-Fi Aware apparatus A may perform NAN ranging with the second Wi-Fi Aware apparatus B. For example, in a second period 1202 for a NAN ranging session, the first Wi-Fi Aware apparatus A may perform NAN ranging with the third Wi-Fi Aware apparatus C. In a period (each of periods 1209 to 1212) for an AP, at least one of the first Wi-Fi Aware apparatus A to the fifth Wi-Fi Aware apparatus E may perform Wi-Fi communication. For example, in the first period 1209 for an AP, at least one of the first Wi-Fi Aware apparatus A to the fifth Wi-Fi Aware apparatus E may perform Wi-Fi communication.

Referring to FIG. 12A and part (b) of12B, in the case of a burst period of 512 TUs, the second Wi-Fi Aware apparatus B may perform NAN ranging with the first Wi-Fi Aware apparatus A in at least one of periods (at least one of periods 1201 and 1205) for a NAN ranging session. In at least one period (at least one of periods 1202 to 1204 and 1206 to 1208), the second Wi-Fi Aware apparatus B may operate in the doze state. The second Wi-Fi Aware apparatus B may perform Wi-Fi communication in at least one period (at least one of periods 1209 to 1212) for an AP.

Referring to FIG. 12A and part (c) o12B, in the case of a burst period of 512 TUs, the third Wi-Fi Aware apparatus C may perform NAN ranging with the first Wi-Fi Aware apparatus A in at least one period (at least one of periods 1202 and 1206) for a NAN ranging session. In at least one period (at least one of periods 1201, 1203 to 1205 and 1207 to 1208), the third Wi-Fi Aware apparatus C may operate in the doze state. The third Wi-Fi Aware apparatus C may perform Wi-Fi communication in at least one period (at least one of periods 1209 to 1212) for an AP.

Referring to FIG. 12A and part (d) of 12B, in the case of a burst period of 512 TUs, the fourth Wi-Fi Aware apparatus D may perform NAN ranging with the first Wi-Fi Aware apparatus A in at least one period (at least one of periods 1203 and 1207) for a NAN ranging session. In at least one period (at least one of periods 1201 to 1202, 1204 to 1206, and 1208), the fourth Wi-Fi Aware apparatus D may operate in the doze state. The fourth Wi-Fi Aware apparatus D may perform Wi-Fi communication in at least one period (at least one of periods 1209 to 1212) for an AP.

Referring to FIG. 12A and part (e) of 12B, in the case of a burst period of 512 TUs, the fifth Wi-Fi Aware apparatus E may perform NAN ranging with the first Wi-Fi Aware apparatus A in at least one period (at least one of periods 1204 and 1208) for a NAN ranging session. In at least one period (at least one of periods 1201 to 1203 and 1205 to 1207), the fifth Wi-Fi Aware apparatus E may operate in the doze state. The fifth Wi-Fi Aware apparatus E may perform Wi-Fi communication in at least one period (at least one of periods 1209 to 1212) for an AP.

Although FIG. 12A and 12Billustrate that five Wi-Fi Aware apparatuses perform NAN ranging for descriptive convenience, the technical idea of the disclosure may also be applied to NAN ranging between various numbers of Wi-Fi Aware apparatuses. Although the time periods for ranging sessions allocated to each Wi-Fi Aware apparatus are illustrated as the same in FIG. 12A and12Bfor the descriptive convenience, the time periods may be configured to be different from each other according to the design specifications.

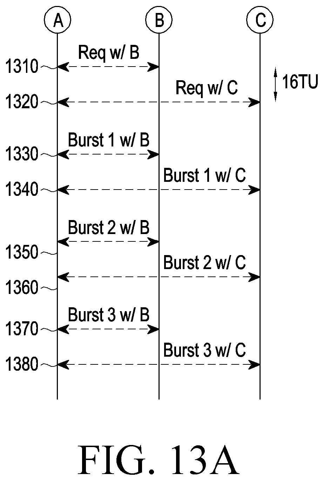

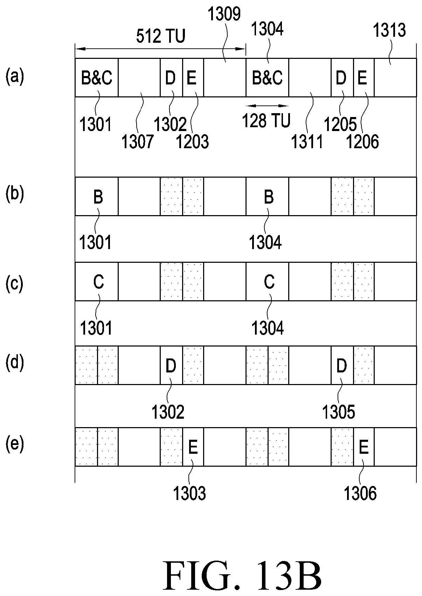

FIGS. 13A and 13B are diagrams illustrating a 1:N NAN ranging procedure according to another embodiment of the disclosure.

In FIGS. 13A and 13B, a first Wi-Fi Aware apparatus A may perform a 1:N NAN ranging procedure with a second Wi-Fi Aware apparatus B, a third Wi-Fi Aware apparatus C, a fourth Wi-Fi Aware apparatus D, and a fifth Wi-Fi Aware apparatus E. In FIG. 13A and FIG. 13B, the first Wi-Fi Aware apparatus A may perform a NAN ranging procedure with the second Wi-Fi Aware apparatus B and the third Wi-Fi Aware apparatus C in the same time period.

Referring to FIG. 13A, in operation 1310, the first Wi-Fi Aware apparatus A may transmit an FTM request to the second Wi-Fi Aware apparatus B, and may receive a corresponding Ack message from the second Wi-Fi Aware apparatus B. In operation 1320, the first Wi-Fi Aware apparatus A may perform operation 1301, transmit an FTM request to the third Wi-Fi Aware apparatus C after a predetermined period (e.g., 16 TUs), and receive a corresponding Ack message from the third Wi-Fi Aware apparatus C.

In operation 1330, the first Wi-Fi Aware apparatus A may receive a first FTM (Burst 1 w/ B) from the second Wi-Fi Aware apparatus B, and may transmit a corresponding Ack message to the second Wi-Fi Aware apparatus B. In operation 1340, the first Wi-Fi Aware apparatus A may receive a first FTM (Burst 1 w/ C) from the third Wi-Fi Aware apparatus C, and transmit a corresponding Ack message to the third Wi-Fi Aware apparatus C.

In operation 1350, the first Wi-Fi Aware apparatus A may receive a second FTM (Burst 2 w/ B) from the second Wi-Fi Aware apparatus B, and may transmit a corresponding Ack message to the second Wi-Fi Aware apparatus B. In operation 1360, the first Wi-Fi Aware apparatus A may receive a second FTM (Burst 2 w/ C) from the third Wi-Fi Aware apparatus C, and transmit a corresponding Ack message to the third Wi-Fi Aware apparatus C.

In operation 1370, the first Wi-Fi Aware apparatus A may receive a third FTM (Burst 3 w/ B) from the second Wi-Fi Aware apparatus B, and may transmit a corresponding Ack message to the second Wi-Fi Aware apparatus B. In operation 1380, the first Wi-Fi Aware apparatus A may receive a third FTM (Burst 3 w/ C) from the third Wi-Fi Aware apparatus C, and transmit a corresponding Ack message to the third Wi-Fi Aware apparatus C.

Referring to FIG. 13A and part (a) of FIG. 13B, in the case of a burst period of 512 TUs, the first Wi-Fi Aware apparatus A may perform NAN ranging with each of the second Wi-Fi Aware apparatus B to the fifth Wi-Fi Aware apparatus E in a period (each of periods 1301 to 1306) for a NAN ranging session. For example, a first period 1301 for a NAN ranging session may be configured as 128 TUs, and a second section 1302 for the NAN ranging session may be configured as 64 TUs. For example, in the first period 1301 for a NAN ranging session, the first Wi-Fi Aware apparatus A may perform NAN ranging with the second Wi-Fi Aware apparatus B and the third Wi-Fi Aware apparatus C. For example, in a second period 1302 for a NAN ranging session, the first Wi-Fi Aware apparatus A may perform NAN ranging with the fourth Wi-Fi Aware apparatus D. In a period (each of periods 1307, 1309, 1311, and 1313) for an AP, at least one of the first Wi-Fi Aware apparatus A to the fifth Wi-Fi Aware apparatus E may perform Wi-Fi communication.

Referring to FIG. 13A and part (b) of FIG. 13B, in the case of a burst period of 512 TUs, the second Wi-Fi Aware apparatus B may perform NAN ranging with the first Wi-Fi Aware apparatus A in at least one of periods (at least one of periods 1301 and 1304) for a NAN ranging session. In at least one period (at least one of periods 1302 to 1303 and 1305 to 1306), the second Wi-Fi Aware apparatus B may operate in the doze state. The second Wi-Fi Aware apparatus B may perform Wi-Fi communication in at least one period (at least one of periods 1307, 1309, 1311, and 1313) for an AP.

Referring to FIG. 13A and part (c) of FIG. 13B, in the case of a burst period of 512 TUs, the third Wi-Fi Aware apparatus C may perform NAN ranging with the first Wi-Fi Aware apparatus A in at least one period (at least one of periods 1301 and 1304) for a NAN ranging session. In at least one period (at least one of periods 1302, 1303, 1305, and 1306), the third Wi-Fi Aware apparatus C may operate in the doze state. The third Wi-Fi Aware apparatus C may perform Wi-Fi communication in at least one period (at least one of periods 1307, 1309, 1311, and 1313) for an AP.

Referring to FIG. 13A and part (d) of FIG. 13B, in the case of a burst period of 512 TUs, the fourth Wi-Fi Aware apparatus D may perform NAN ranging with the first Wi-Fi Aware apparatus A in at least one period (at least one of periods 1302 and 1305) for a NAN ranging session. In at least one period (at least one of periods 1301, 1303, 1304, and 1306), the fourth Wi-Fi Aware apparatus D may operate in the doze state. The fourth Wi-Fi Aware apparatus D may perform Wi-Fi communication in at least one period (at least one of periods 1307, 1309, 1311, and 1313) for an AP.

Referring to FIG. 13A and part (e) of FIG. 13B, in the case of a burst period of 512 TUs, the fifth Wi-Fi Aware apparatus E may perform NAN ranging with the first Wi-Fi Aware apparatus A in at least one period (at least one of periods 1303 and 1306) for a NAN ranging session. In at least one period (at least one of periods 1301 to 1302 and 1304 to 1305), the fifth Wi-Fi Aware apparatus E may operate in the doze state. The fifth Wi-Fi Aware apparatus E may perform Wi-Fi communication in at least one period (at least one of periods 1307, 1309, 1311, and 1313) for an AP.

Although FIG. 13A and FIG. 13B illustrate that five Wi-Fi Aware apparatuses perform NAN ranging for descriptive convenience, the technical idea of the disclosure may also be applied to NAN ranging between various numbers of Wi-Fi Aware apparatuses. Although FIGS. 13A and FIG. 13B illustrate the same time period for a ranging session being allocated to the second Wi-Fi Aware apparatus B and the third Wi-Fi Aware apparatus C for the descriptive convenience, the same time period for a ranging session may be allocated among three or more Wi-Fi Aware apparatuses according to a design specification.

The NAN ranging-based AoN method proposed in the disclosure may continuously identify the state of a Wi-Fi Aware apparatus and determine whether a NAN connection of Wi-Fi Aware apparatuses is to be maintained, by using the distance between Wi-Fi Aware apparatuses. According to an embodiment, the Wi-Fi Aware apparatus may be switched to an AoN mode after data transmission is completed (e.g., QuickShare). According to an embodiment, a Wi-Fi Aware apparatus may be switched to the AoN mode when a display is turned off (including long-term non-use of an application) during a Wi-Fi Aware connection.

According to an embodiment, a Wi-Fi Aware apparatus may be switched from the AoN mode to a legacy mode to which the AoN mode is not applied, when exchanging a ranging termination frame.

According to an embodiment, the NAN ranging burst period (adaptive NAN ranging burst period) may be adaptively configured based on a location (e.g., Ingress/Egress) or a LOS/NLOS condition of a specific Wi-Fi Aware apparatus.

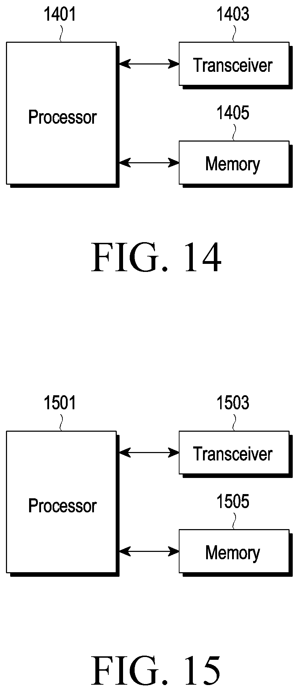

FIG. 14 is a diagram illustrating a structure of a first electronic apparatus according to an embodiment of the disclosure.

The first electronic apparatus of FIG. 14 may be implemented as a station, an electronic apparatus, or a first Wi-Fi Aware apparatus that transmits data by using the NAN (or Wi-Fi Aware) communication illustrated in FIGS. 1 to 13B.

Referring to FIG. 14, the first electronic apparatus may include a processor 1401, a transceiver 1403, and memory 1405. In the disclosure, the processor 1401 may be defined as a circuit, an application-specific integrated circuit, or at least one processor. The processor 1401 may also be referred to as a control unit or a controller.

The processor 1401 may control the overall operation of the first electronic apparatus in the embodiments described in the disclosure. Specifically, the processor 1401 may control operations of a station, an electronic apparatus, or a first Wi-Fi Aware apparatus that transmits data using, for example, NAN (or Wi-Fi Aware) communication illustrated in FIGS. 1 to 13B..

The transceiver 1403 may transmit and receive signals to and from another electronic apparatus or an access point. The transceiver 1403 may also be referred to as a transmission/reception unit.

The memory 1405 may store at least one of information transmitted or received through the transceiver 1403 and information generated through the processor 1401.

The processor 1401 may identify that the first electronic apparatus is operating in an always-on (AoN) mode for maintaining a Wi-Fi Aware connection with at least one electronic apparatus, based on at least one event. The processor 1401 may enable the first electronic apparatus to perform Wi-Fi Aware communication with a second electronic apparatus in a first time period configured in the AoN mode. The processor 1401 may switch the state of the first electronic apparatus to a doze state in a second time period configured in the AoN mode.

The processor 1401 may perform Wi-Fi Aware communication-based ranging with the second electronic apparatus in the first time period configured in the AoN mode. The processor 1401 may, based on the distance between the first electronic apparatus and the second electronic apparatus identified according to a result of the ranging performed in the first time period, and a threshold value, determine that the second electronic apparatus has entered the target area or has moved outside the target area.

When the second electronic apparatus is determined to have entered the target area, the processor 1401 may increase the first time period for the Wi-Fi Aware communication. When the second electronic apparatus is determined to have moved outside the target area, the processor 1401 may decrease the first time period for the Wi-Fi Aware communication.

The processor 1401 may perform Wi-Fi communication through an access point (AP) connection in a third time period configured in the AoN mode.

The processor 1401 may, in the first time period configured in the AoN mode, perform Wi-Fi Aware communication with a third electronic apparatus.

When the second electronic apparatus is determined to have moved outside the target area, the processor 1401 may start a timer. When the timer is expired, the processor 1401 may release the Wi-Fi Aware connection.

FIG. 15 is a diagram illustrating a structure of a second electronic apparatus according to an embodiment of the disclosure.

The second electronic apparatus of FIG. 15 may be implemented as one of a station, an electronic apparatus, or one of a second Wi-Fi Aware apparatus to a fifth Wi-Fi Aware apparatus that transmits data by using the NAN (or Wi-Fi Aware) communication illustrated inFIGS. 1 to 13B..

Referring to FIG. 15, the second electronic apparatus may include a processor 1501, a transceiver 1503, and memory 1505. In the disclosure, the processor 1501 may be defined as a circuit, an application-specific integrated circuit, or at least one processor. The processor 1501 may also be referred to as a control unit or a controller.

The processor 1501 may control the overall operation of the second electronic apparatus in the embodiments described in the disclosure. Specifically, the processor 1501 may control the operation of, for example, one of a station, an electronic apparatus, or one of the second to fifth Wi-Fi Aware apparatuses that receives data by using the NAN (or Wi-Fi Aware) communication illustrated inFIGS. 1 to 13B..

The transceiver 1503 may transmit and receive signals to and from another electronic apparatus or an access point. The transceiver 1503 may also be referred to as a transmission/reception unit.

The memory 1505 may store at least one of information transmitted or received through the transceiver 1503 and information generated through the processor 1501.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural, and either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. An operation method of a first electronic device supporting Wi-Fi Aware communication, the method comprising:
based on at least one event, identifying that the first electronic device operates in an always on NAN (AoN) mode in which the first electronic device maintains a Wi-Fi Aware connection with at least one electronic device;
performing, by the first electronic device, Wi-Fi Aware communication with a second electronic device in a first time period configured in the AoN mode; and
switching a state of the first electronic device to a doze state in a second time period configured in the AoN mode.

2. The method of claim 1, further comprising:
performing Wi-Fi Aware communication-based ranging with the second electronic device in the first time period configured in the AoN mode; and
based on a threshold value and a distance between the first electronic device and the second electronic device, identified as a result of the ranging performed in the first time period, determining that the second electronic device enters a target area or moves out of the target area.

3. The method of claim 2, further comprising, in case of determining that the second electronic device enters the target area, increasing the first time period for the Wi-Fi Aware communication.

4. The method of claim 2, further comprising, in case of determining that the second electronic device moves out of the target area, decreasing the first time period for the Wi-Fi Aware communication.

5. The method of claim 1, further comprising performing Wi-Fi communication through an access point (AP) connection in a third time period configured in the AoN mode.

6. The method of claim 1, further comprising performing, by the first electronic device, Wi-Fi Aware communication with a third electronic device in the first time period configured in the AoN mode.

7. The method of claim 2, further comprising:
in case of determining that the second electronic apparatus moves out of the target area, starting a timer; and
if the timer is expired, releasing the Wi-Fi Aware connection.

8. A first electronic device supporting Wi-Fi Aware communication, the device comprising:
a transceiver; and
a controller,
wherein the controller is configured to:
based on at least one event, identify that the first electronic device operates in an always on NAN (AoN) mode in which the first electronic device maintains a Wi-Fi Aware connection with at least one electronic device;
cause the first electronic device to perform Wi-Fi aware communication with a second electronic device in a first time period configured in the AoN mode; and
switch a state of the first electronic device to a doze state in a second time period configured in the AoN mode.

9. The device of claim 8, wherein the controller is configured to:
perform Wi-Fi Aware communication-based ranging with the second electronic device in the first time period configured in the AoN mode; and
based on a threshold value and a distance between the first electronic device and the second electronic device, identified as a result of the ranging performed in the first time period, determine that the second electronic device enters a target area or moves out of the target area.

10. The device of claim 9, wherein the controller is configured to, in case of determining that the second electronic device enters the target area, increase the first time period for the Wi-Fi Aware communication.

11. The device of claim 9, wherein the controller is configured to, in case of determining that the second electronic device moves out of the target area, decrease the first time period for the Wi-Fi Aware communication.

12. The device of claim 8, wherein the controller is configured to perform Wi-Fi communication through an access point (AP) connection in a third time period configured in the AoN mode.

13. The device of claim 8, wherein the controller is configured to perform Wi-Fi Aware communication with a third electronic device in the first time period configured in the AoN mode.

14. The device of claim 9, wherein the controller is configured to:
in case of determining that the second electronic device moves out of the target area, start a timer; and
if the timer is expired, release the Wi-Fi Aware connection.
